# EUROPÄISCHE PATENTSCHRIFT

(11) **EP 4 669 537 B1**
(45) Veröffentlichungstag und Bekanntmachung des Hinweises auf die Patenterteilung: **02.12.2026**
(21) Anmeldenummer: 25716045.7
(22) Anmeldetag: 24.03.2025
(51) Int. Cl.: B60G 17/0165, B60G 17/02, B60G 17/06

(54) **VERFAHREN ZUM BETREIBEN EINES KRAFTFAHRZEUGS, KRAFTFAHRZEUG UND SYSTEM MIT EINER ZENTRALEN ELEKTRONISCHEN RECHENEINRICHTUNG**
METHOD FOR OPERATING A MOTOR VEHICLE, MOTOR VEHICLE, AND SYSTEM COMPRISING A CENTRAL ELECTRONIC COMPUTING DEVICE
PROCÉDÉ DE FONCTIONNEMENT D'UN VÉHICULE AUTOMOBILE, VÉHICULE AUTOMOBILE ET SYSTÈME COMPRENANT UN DISPOSITIF INFORMATIQUE ÉLECTRONIQUE CENTRAL

(30) Priorität: 27.04.2024 DE 102024001373
(43) Veröffentlichungstag der Anmeldung: 31.12.2025
(73) Patentinhaber: Mercedes-Benz Group AG, 70372 Stuttgart (DE)
(72) Erfinder: SCHINDLER, Wolfgang, 75443 Ötisheim (DE); ARNOLD, Frank, 70191 Stuttgart (DE); EICHLER, Patrick, 71032 Böblingen (DE); KERN, Simon, 70794 Filderstadt (DE)
(74) Vertreter: Novagraaf Group
(86) Internationale Anmeldenummer: PCT/EP2025/058025
(87) Internationale Veröffentlichungsnummer: WO 2025/223767

(56) Entgegenhaltungen:
- EP-A1- 3 922 491
- DE-A1- 102005 060 173
- DE-A1- 102017 201 838
- DE-A1- 102017 208 239
- DE-A1- 102018 209 391

## Beschreibung

Die Erfindung betrifft ein Verfahren zum Betreiben eines Kraftfahrzeugs, bei welchem mittels einer Fahrzeugeinrichtung des Kraftfahrzeugs eine Bodenunebenheit einer Straße ermittelt wird, gemäß dem Patentanspruch 1. Ferner betrifft die Erfindung ein korrespondierendes Kraftfahrzeug gemäß dem Patentanspruch 9, sowie ein System mit einer zentralen elektronischen Recheneinrichtung, dem wenigstens zwei Kraftfahrzeuge zugeordnet sind, gemäß dem Patentanspruch 10.

Um beim Fahren eines Kraftfahrzeugs besonders viel Komfort sicherzustellen, werden beispielsweise verstellbare Dämpfer beziehungsweise Federungen auf normalen Straßen, beziehungsweise Fahrbahnen mit unbeschädigten Belag, insbesondere bei Gradeausfahrten, in einer weichen Stellung betrieben. Treten während der Fahrt Unebenheiten, wie beispielsweise Schlaglöcher oder Schwellen auf, die so ausgeprägt sind, dass eine Federwegbegrenzung erreicht wird, kommt es sowohl haptisch wie auch akustisch zu deutlichen Komforteinbußen und einer erhöhten Bauteilbelastung, insbesondere Bauteilspitzenbelastung.

Aus dem Stand der Technik ist bekannt, dass das Ermitteln eines Höhenprofils einer Straße mittels Stereokameras erfolgen kann. Ferner ist bekannt, dass ein Höhenprofil zur prädiktiven Beeinflussung der Federung benutzt werden kann. Ferner kann in Abhängigkeit von GPS-Daten mittels einer Luftfederung des Fahrzeuges sein Fahrzeugniveau prädiktiv verstellt werden.

Die DE 10 2017 208 239 A1 offenbart ein Verfahren gemäß dem Oberbegriff des Anspruchs 1 zur Bestimmung einer Straßenunebenheit, bei welchem Signale einer Radeinfedersensorik und einer Inertialsensorik erfasst werden. Auf Grundlage dieser Sensorsignale wird ein Straßenbeobachtersignal gebildet, aus dem ein Straßenhöhenprofil rekonstruiert wird. Die Erkennung einer Bodenunebenheit erfolgt anschließend anhand dieses rekonstruierten Straßenhöhenprofils.

Die EP 3 922 491 B1 offenbart ein System und ein Verfahren zur Dämpfungssteuerung eines Kraftfahrzeugs, bei welchem Fahrwerksgrößen wie eine Aufbaubeschleunigung und ein Federweg erfasst werden. Auf Grundlage dieser Größen wird eine straßenbezogene Verschiebungsgröße berechnet, welche zur Bestimmung einer Stellgröße für ein Fahrwerkselement verwendet wird, um Schwingungen des Aufbaus zu dämpfen

Darüber hinaus zeigt die DE 10 2020 007 770 A1 ein Verfahren zum Bestimmen einer Bodenunebenheit auf einer Straße mittels eines Systems eines Kraftfahrzeugs, wobei die Bodenunebenheit in Abhängigkeit von einem erfassten Federweg und der Federweggeschwindigkeit bestimmt wird.

Schließlich offenbaren die DE 10 2005 060 173 A1, die DE 10 2017 201 838 A1 und die DE 10 2018 209 391 A1 noch weitere nennungswürdige Systeme zum Stand der Technik zum Gegenstand der vorliegenden Erfindung.

Aufgabe der vorliegenden Erfindung ist es, ein Verfahren, ein Kraftfahrzeug sowie ein System bereitzustellen, mittels welchem auf besonders vorteilhafte Weise eine Bestimmung von Bodenunebenheiten ermöglicht wird und in Abhängigkeit davon das Fahrzeug vorteilhaft und dabei beispielsweise besonders komfortabel und/oder sicher betrieben werden kann.

Diese Aufgabe wird erfindungsgemäß durch die Gegenstände der unabhängigen Patentansprüche gelöst. Vorteilhafte Ausgestaltungen und Weiterbildungen sind Gegenstand der abhängigen Ansprüche, der Beschreibung sowie der Zeichnung.

Ein erster Aspekt der Erfindung betrifft ein Verfahren zum Betreiben eines Kraftfahrzeugs, bei welchem mittels einer Fahrzeugeinrichtung des Kraftfahrzeugs eine Bodenunebenheit einer Straße beziehungsweise einer Fahrbahn ermittelt wird. Dabei wird bei dem erfindungsgemäßen Verfahren mittels einer jeweiligen Federwegerfassungseinrichtung eines jeweiligen Rads des Kraftfahrzeugs ein Federweg und/oder eine Federweggeschwindigkeit des jeweiligen Rads erfasst und in Abhängigkeit von dem jeweiligen erfassten Federweg und/oder der Federweggeschwindigkeit die Bodenunebenheit mittels einer elektronischen Recheneinrichtung, welche beispielsweise eine Komponente eines Steuergeräts beziehungsweise eines Fahrerassistenzsystems des Kraftfahrzeugs sein kann, der Fahrzeugeinrichtung ermittelt.

Um die Bodenunebenheit besonders vorteilhaft zu erkennen ist erfindungsgemäß ferner vorgesehen, zusätzlich eine Aufbaudrehwinkelbeschleunigung mit einem Sensor zu erfassen und die Bodenunebenheit zusätzlich in Abhängigkeit der Aufbaudrehwinkelbeschleunigung zu ermitteln.

Bei dem Kraftfahrzeug handelt es sich insbesondere um einen Personenkraftwagen oder einen Lastkraftwagen. Die Federwegerfassungseinrichtung ist insbesondere ein Federwegsensor, wobei insbesondere kontinuierlich der Federweg des jeweiligen Rads gemessen werden kann. Durch Fahrbahnanregungen aufgrund der Bodenunebenheiten variieren die Federwege der jeweiligen Räder kontinuierlich. Aufgrund der Federwege und/oder deren Ableitung, also der Federweggeschwindigkeit für jedes Rad, kann somit beispielsweise bei einer Schlaglochdurchfahrt, also beim Befahren einer möglichen Bodenunebenheit, ein markantes Muster erkannt beziehungsweise ermittelt werden. Für eine besonders vorteilhafte Bodenunebenheitserfassung wird sowohl der erfasste Federweg als auch die Federweggeschwindigkeit für das Ermitteln der Bodenunebenheit verwendet.

Dabei eignen sich sowohl der Federweg als auch die Federweggeschwindigkeit insbesondere beim Ermitteln von Schlaglöchern, können jedoch beispielsweise bei der Detektion von langgezogenen beziehungsweise breiten Bodenschwellen, wie beispielsweise Bremsschwellen (Englisch: Sleeping Policeman), diese nicht ideal erfassen.

Daher wird bei dem erfindungsgemäßen Verfahren zusätzlich mittels eines Sensors, wie beispielsweise einem Gyroskop und/oder einem Beschleunigungssensor, welche insbesondere eine Pose, also eine Orientierung und/oder Lage des Kraftfahrzeugs im Raum, erfasst, die Aufbaudrehwinkelbeschleunigung erfasst. Dabei wird eine Nickwinkelbeschleunigung des Kraftfahrzeugs, also eine Rotation des Kraftfahrzeugs um die Fahrzeugquerrichtung beziehungsweise seine Fahrzeugquerachse, verwendet, wodurch auf vorteilhafte Weise Bodenunebenheiten in Form von Bodenschwellen ermittelt beziehungsweise erfasst werden können.

Mit anderen Worten ist ein Verfahren gezeigt, bei welchem durch eine Fahrzeugeinrichtung während einer Fahrt des Kraftfahrzeugs mittels Federwegerfassungseinrichtungen der Räder und einem weiteren Sensor, welche insbesondere ein Nicken des Kraftfahrzeugs erfassen kann, überfahrene Bodenunebenheiten erfasst werden. Somit ist es möglich, Bodenunebenheiten, wie beispielsweise Schlaglöcher und Schwellen, ein- und/oder beidseitig, während oder zumindest nach deren Durchfahrt oder dem Überfahren zu detektieren. Die dabei erhaltene Information kann insbesondere in Verbindung mit Positionsdaten, beispielsweise GPS-Koordinaten, der jeweiligen Bodenunebenheit gespeichert werden und vorteilhaft für einen weiteren Betrieb des Kraftfahrzeugs oder zum Warnen weiterer Fahrzeuge verwendet werden. Darüber hinaus können die Informationen beispielsweise für den Erhalt beziehungsweise Restauration des Straßennetzes verwendet werden.

Erfindungsgemäß beschreibt die Aufbaudrehwinkelbeschleunigung eine Nickwinkelbeschleunigung des Kraftfahrzeugs, wobei zur Detektion von einer langgezogenen, breiten Bodenschwelle als die Bodenunebenheit, bei der Federweg und Federweggeschwindigkeit zur Erkennung der Bodenunebenheit ungeeignet sind, die Nickwinkelbeschleunigung und somit eine Rotation des Kraftfahrzeugs um die Fahrzeugquerrichtung verwendet werden, wobei mittels des Federwegs und/oder der Federweggeschwindigkeit Schlaglöcher und Verwerfungen als die Bodenunebenheit ermittelt werden und wobei mittels der Nickwinkelbeschleunigung die langgezogene, breite Bodenschwelle als die Bodenunebenheit ermittelt wird, und wobei somit insgesamt ein Nicken des Kraftfahrzeugs zum Ermitteln der Bodenunebenheit herangezogen wird. Mit anderen Worten wird mittels des Sensors eine Nickbewegung des Kraftfahrzeugs, also eine Bewegung, insbesondere eine Drehung, um seine Querachse erfasst. Durch das Einbeziehen der Nickwinkelbeschleunigung bei dem Bestimmen beziehungsweise Erfassen der Bodenunebenheit können langgestreckte beziehungsweise quer zur Fahrbahnrichtung breite Bodenunebenheiten, wie Geschwindigkeitsschwellen, vorteilhaft erfasst werden. Dabei ergibt sich der Vorteil, dass das Verfahren besonders vorteilhaft zum Ermitteln insbesondere einer Vielzahl von Bodenunebenheiten verwendet werden kann, wodurch das Fahrzeug beispielsweise besonders vorteilhaft betrieben werden kann.

In weiterer vorteilhafter Ausgestaltung der Erfindung wird die ermittelte Bodenunebenheit mit ihrer Position in einer Speichereinrichtung der Fahrzeugeinrichtung abgespeichert. Zusätzlich oder alternativ wird die ermittelte Bodenunebenheit mit ihrer Position an eine fahrzeugexterne, zentrale elektronische Recheneinrichtung, insbesondere via Car2X-Kommunikation, übertragen und/oder von dieser empfangen. Mit anderen Worten kann zu der ermittelten Bodenunebenheit ihre Position erfasst werden, insbesondere durch ein Navigationssystem des Fahrzeugs beziehungsweise ein Positionsempfangsgerät, wie beispielsweise einen GPS-Empfänger, und zusammen mit dem Vorhandensein der Bodenunebenheit in einem Speicher, insbesondere der elektronischen Recheneinrichtung der Fahrzeugeinrichtung, abgelegt werden. Zusätzlich oder alternativ kann die Bodenunebenheit und ihre Position an eine zentrale elektronische Recheneinrichtung übermittelt werden, welche nicht Bestandteil des Fahrzeugs ist, sondern beispielsweise eine Server-Infrastruktur beziehungsweise ein Backend einer Cloud-Infrastruktur beispielsweise des Fahrzeugherstellers und/oder einer Verkehrsbehörde bildet. Dabei kann die Kommunikation zwischen Kraftfahrzeug und fahrzeugexterner Recheneinrichtung insbesondere mittels Car2X durchgeführt werden. Dies ermöglicht eine Kommunikation beziehungsweise eine Übertragung von Daten in beide Richtungen, also vom Kraftfahrzeug zur fahrzeugexternen, zentralen elektronischen Recheneinrichtung und von dieser in Richtung Kraftfahrzeug. So kann die zentrale elektronische Recheneinrichtung bei dem Verfahren dazu genutzt werden, Informationen betreffend die Bodenunebenheiten, wie ihre Position, aber auch weitere Informationen, beispielsweise eine ermittelte Schlaglochtiefe oder dergleichen zentral zu verwalten und an weitere Kraftfahrzeuge bereitzustellen. So können Kraftfahrzeuge anhand von über eine Cloud abrufbare Informationen betrieben werden. So kann beispielsweise eine Warnung vor Bodenunebenheiten zentral ausgegeben werden. Dadurch ergibt sich der Vorteil, dass das Kraftfahrzeug besonders komfortabel und darüber hinaus besonders schonend, da Bodenunebenheiten bekannt sind und dadurch Spitzenbelastungen vom Bauteil vermieden werden können, betrieben werden kann. Sind die Daten zu den Bodenunebenheiten lediglich im Speicherbereich der Fahrzeugeinrichtung vorgehalten, gilt dies insbesondere für Wiederholungsfahrten an entsprechenden Positionen. Durch die fahrzeugexterne, zentrale elektronische Recheneinrichtung können Positionen und beispielsweise eine Klassifizierung von Schlaglöchern und Schwellen sämtlicher Straßen weltweit, welche von entsprechenden Kraftfahrzeugen überfahren und dabei ermittelt werden, vorgehalten werden.

So können in weiterer vorteilhafter Ausgestaltung der Erfindung aufgrund der erfassten beziehungsweise ermittelten Bodenunebenheit ein Signal in dem Kraftfahrzeug und/oder über die fahrzeugexterne, zentrale elektronische Recheneinrichtung, insbesondere wieder mit Kommunikationsmitteln für eine Car2X-Kommunikation, in einem weiteren Kraftfahrzeug, welches sich insbesondere in der Nähe der Position der Bodenunebenheit befindet, bereitgestellt werden. Mit anderen Worten wird beim oder nach dem Erfassen der Bodenunebenheit durch das Verfahren ein Signal für das Kraftfahrzeug oder ein weiteres Kraftfahrzeug bereitgestellt. Bei dem Signal kann es sich um ein, insbesondere akustisches und/oder optisches, Warnsignal handeln, zusätzlich oder alternativ kann das Signal als Steuersignal ausgebildet sein, welches dazu dient, beispielsweise ein Fahrerassistenzsystem und/oder eine Federung und/oder Dämpfung des Kraftfahrzeugs anzusteuern. Eine verstellbare Federung kann dabei sowohl die Aufbaufederung, wie beispielsweise Mehrkammerluftfedern, wie auch aktive Drehstäbe, sogenannte Wankstabilisierungssysteme, umfassen. Dadurch ergibt sich der Vorteil, dass das Kraftfahrzeug besonders komfortabel und/oder ausfallsicher betrieben werden kann.

In weiterer vorteilhafter Ausgestaltung der Erfindung wird in Abhängigkeit von der ermittelten Bodenunebenheit für eine verstellbare Federung und/oder Dämpfung des Kraftfahrzeugs, welche beispielsweise eine Luftfederung ist und für jedes der Räder des Fahrzeugs individuell eingestellt werden kann, eine Festigkeit für wenigstens ein Rad zum Überfahren beziehungsweise während des Überfahrens der Bodenunebenheit durch die elektrische Einrichtung vorgegeben beziehungsweise verstellt oder eingestellt. Mit anderen Worten dient das Verfahren zum Betreiben einer einstellbaren Federung des Kraftfahrzeugs, wobei die Bodenunebenheit beziehungsweise Informationen über die Bodenunebenheit verwendet werden können, die insbesondere von dem Kraftfahrzeug und zusätzlich oder alternativ auch von der zentralen elektronischen Recheneinrichtung und somit von weiteren Kraftfahrzeugen bereitgestellt werden können. Insbesondere wird die Information über Bodenunebenheiten prädiktiv verwendet, um noch vor dem Überfahren des entsprechenden Hindernisses beziehungsweise der Bodenunebenheit eine Verstelldämpfung, insbesondere in Richtung "hart" zu verstellen. Dadurch ergibt sich der Vorteil, dass das Kraftfahrzeug besonders komfortabel und verschleißarm betrieben werden kann.

In vorteilhafter Ausgestaltung der Erfindung erfolgt das Verstellen der Federung und/oder Dämpfung bei einem in Fahrtrichtung des Kraftfahrzeugs hinten liegenden Rad, nachdem aufgrund des Befahrens der Bodenunebenheit mit einem vorderen Rad diese ermittelt wird. Zusätzlich oder alternativ erfolgt das Verstellen der Federung und/oder Dämpfung bei einer Wiederholung der Fahrt beziehungsweise bei einem wiederholten Befahren der Position der ermittelten Bodenunebenheit. In weiterer vorteilhafter Weise erfolgt das Verstellen der Federung und/oder Dämpfung aufgrund über die fahrzeugexterne, zentrale elektronische Recheneinrichtung durch ein weiteres Kraftfahrzeug ermittelten Bodenunebenheit. Mit anderen Worten gibt es mehrere Möglichkeiten, wie Informationen zu den Bodenunebenheiten für das Einstellen der Federung und/oder Dämpfung verwendet werden können. Sollte es sich ergeben, dass die Federungs- beziehungsweise Dämpfungsverstellung in Abhängigkeit einer aktuellen Geschwindigkeit des Kraftfahrzeugs derart schnell verstellbar ist, dass beispielsweise ein Hinterrad des Kraftfahrzeugs noch härter gefedert und/oder gedämpft werden kann, wenn die Bodenunebenheit während dem Durchfahren mit einem Vorderrad des Kraftfahrzeugs detektiert wird, kann eine entsprechende Verstellung erfolgen. Unter der Prämisse, dass langgezogene Bodenwellen, welche der Geschwindigkeitsbegrenzung dienen, besonders vorteilhaft durch das Verfahren erfasst werden können und diese in der Regel auch langsam befahren werden, kann dies möglich sein.

Zusätzlich oder alternativ werden die durch ein Kraftfahrzeug ermittelten Daten beziehungsweise Informationen über die Bodenunebenheit bei einem erneuten Befahren der Stelle beziehungsweise Position, an welcher die Bodenunebenheit auftritt, verwendet, um die Federung beziehungsweise Dämpfung, insbesondere rechtzeitig, zu stellen. Darüber hinaus kann vorteilhaft, wenn mehrere der entsprechenden Fahrzeuge insbesondere über die fahrzeugexterne, zentrale elektronische Recheneinrichtung vernetzt miteinander betrieben werden, aufgrund des Erfassens der Bodenunebenheit durch ein weiteres Fahrzeug bei dem Fahrzeug eine Federung und/oder Dämpfung entsprechend beim Überfahren eingestellt werden. Dadurch ergibt sich der Vorteil, dass das Kraftfahrzeug sowohl cloudbasiert als auch autonom besonders vorteilhaft betrieben werden kann.

In weiterer vorteilhafter Ausgestaltung der Erfindung wird in Abhängigkeit von der ermittelten Bodenunebenheit eine Geschwindigkeit des Kraftfahrzeugs so weit zu reduziert, dass ein sicheres Überfahren der Bodenunebenheiten und/oder eine ausreichende Reduktion ein Bauteilbelastungen erreicht wird. Mit anderen Worten können die Informationen über die jeweilige Bodenunebenheit auch genutzt werden, um über geeignete Maßnahmen die Geschwindigkeit des Fahrzeugs so weit zu reduzieren, dass ein sicheres Überfahren der Bodenunebenheiten beziehungsweise eine ausreichende Reduktion der Bauteilbelastungen erreicht werden. Geeignete Maßnahmen können dabei eine automatische Reduktion der Geschwindigkeit des Fahrzeugs über Antriebsmomenten- und/oder Bremseingriffe oder die Empfehlung an den Fahrer, die Geschwindigkeit zu reduzieren, sein. Letztere beispielsweise über eine akustische oder optische Warnung oder über eine Anhebung der Gaspedalgegenkraft. Dadurch ergibt sich der Vorteil, dass das Kraftfahrzeug besonders komfortable und/oder ausfallsicher betrieben werden kann.

In weiterer vorteilhafter Ausgestaltung der Erfindung wird anhand der ermittelten Nickwinkelbeschleunigung eine Art der Bodenunebenheit bestimmt. Mit anderen Worten kann die Bodenunebenheit nicht nur erfasst beziehungsweise ermittelt oder bestimmt werden, sondern auch ihre Art beziehungsweise Beschaffenheit kann ermittelt werden. So wird bei dem Ermitteln gemäß Anspruch 1 beispielsweise eine Höhe und eine Tiefe erfasst und, ob es sich um eine bezüglich eines Fahrbahnbeziehungsweise Straßenniveaus positiv oder negative Erhöhung handelt. Gemäß dieser Ausgestaltungsform kann insbesondere aufgrund des Nickens beispielsweise noch die Art der Bodenunebenheit bestimmt werden, beispielsweise ob es sich um eine Bremsschwelle, Rüttelschwelle, um eine linienförmige, parallel zur Fahrtrichtung angeordnete Erhebung und/oder um Schlaglöcher oder dergleichen handelt. Dadurch ergibt sich der Vorteil, dass beispielsweise besonders viele Informationen über die Bodenunebenheiten vorliegen, wodurch das Kraftfahrzeug und/oder weitere Kraftfahrzeuge besonders vorteilhaft betrieben werden können. So ergibt es sich als Vorteil, dass ein Grad der Festigkeit der Federung und/oder Dämpfung gesamthaft und/oder pro Rad in Abhängigkeit von der bestimmten Art der Bodenunebenheit eingestellt beziehungsweise verstellt wird. Zusätzlich oder alternativ können der Grad der Festigkeit der Federung und/oder Dämpfung gesamthaft und/oder pro Rad in Abhängigkeit von einem Fahrzustand, wie beispielsweise einer Fahrzeuggeschwindigkeit und/oder einem Fahrzeugniveau, eingestellt werden. Mit anderen Worten wird die Art der Bodenunebenheit genutzt, um beispielsweise einzustellen, wie stark der Dämpfungsgrad der Federung ist. Durch eine Kombination der Verstellung der Federung und/oder Dämpfung insbesondere auch individuell für jedes Rad unter der Berücksichtigung des Fahrzustands und der Art der Bodenunebenheit ergibt sich der Vorteil, dass das Kraftfahrzeug besonders komfortabel und bauteilschonend betrieben beziehungsweise geführt werden kann.

Ein zweiter Aspekt der Erfindung betrifft ein Kraftfahrzeug, aufweisend eine Fahrzeugeinrichtung, mit einer jeweiligen Federwegerfassungseinrichtung eines jeweiligen Rads, mit einer elektronischen Recheneinrichtung, insbesondere als Komponente eines Steuergeräts beziehungsweise eines Fahrerassistenzsystems, und mit einem Sensor, durch welchen eine Aufbaudrehwinkelbeschleunigung erfassbar sind, wobei das Kraftfahrzeug dazu ausgebildet ist, ein Verfahren gemäß des ersten Aspekts der Erfindung durchzuführen.

Dabei sind vorteilhafte Ausgestaltungen und Weiterbildungen des ersten Aspekts der Erfindung als vorteilhafte Ausgestaltungen und Weiterbildungen des zweiten Aspekts der Erfindung anzusehen und umgekehrt.

Ein dritter Aspekt der Erfindung betrifft ein System mit einer fahrzeugexternen, zentralen elektronischen Recheneinrichtung, wobei dem System wenigstens zwei Kraftfahrzeuge gemäß dem zweiten Aspekt der Erfindung zugeordnet sind, und welches dazu ausgebildet ist, die wenigstens zwei Kraftfahrzeuge mittels eines Verfahrens gemäß dem ersten Aspekt der Erfindung zu betreiben.

Dabei sind Vorteile und vorteilhafte Ausgestaltungen des ersten und zweiten Aspekts der Erfindung als vorteilhafte Ausgestaltungen und Weiterbildungen des dritten Aspekts der Erfindung anzusehen und umgekehrt.

Bei dem Verfahren gemäß dem ersten Aspekt der Erfindung kann es sich insbesondere um ein computerimplementiertes Verfahren handeln. Hierzu betrifft ein weiterer Aspekt der Erfindung ein Computerprogramm mit Programmcodemitteln, welche eine elektronische Recheneinrichtung dazu veranlassen, ein Verfahren durchzuführen. Ferner betrifft die Erfindung auch ein computerlesbares Speichermedium mit dem Computerprogramm. Die elektronische Recheneinrichtung weist insbesondere Schaltkreise, insbesondere integrierte Schaltkreise, sowie Prozessoren und weitere elektronische Bauteile auf, welche eine Durchführung des Verfahrens ermöglichen.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigt:
- Fig. 1: eine schematische Seitenansicht eines Kraftfahrzeugs mit einer Fahrzeugeinrichtung sowie eine fahrzeugexterne, zentrale elektronische Recheneinrichtung;
- Fig. 2: eine schematische Seitenansicht des Kraftfahrzeugs auf einem Straßenabschnitt mit schematischen Messsignalen einer Federwegerfassungseinrichtung der Fahrzeugeinrichtung; und
- Fig. 3: ein schematisches Diagramm einer mittels der Fahrzeugeinrichtung erfassten Nickbewegung auf dem Straßenabschnitt mit langgezogenen beziehungsweise breiten Bodenschwellen, wie beispielsweise Bremsschwellen.

In den Figuren sind gleiche oder funktionsgleiche Elemente mit den gleichen Bezugszeichen versehen.

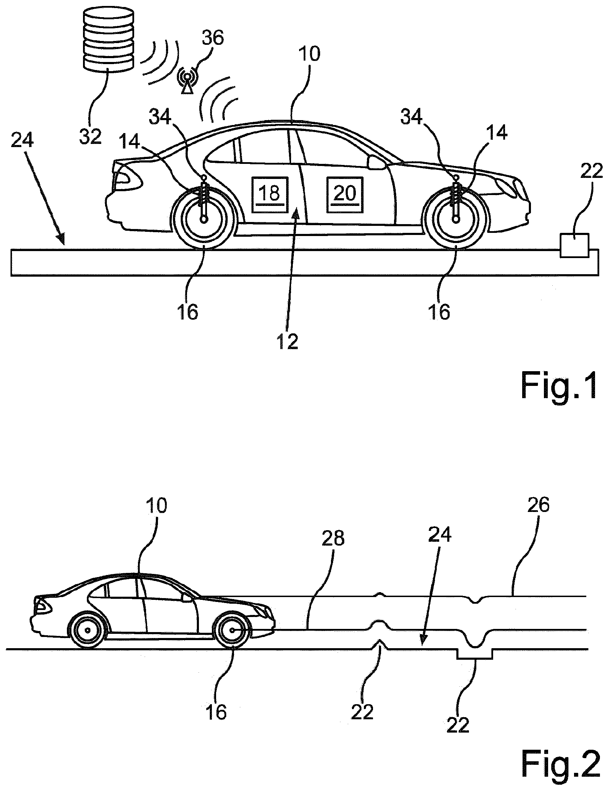

Fig. 1 zeigt in einer schematischen Seitenansicht ein Kraftfahrzeug 10, aufweisend eine Fahrzeugeinrichtung 12 mit einer jeweiligen Federwegerfassungseinrichtung 14 eines jeweiligen Rads 16 und mit einer elektronischen Recheneinrichtung 18, welche insbesondere als eine Komponente eines Steuergeräts ausgebildet sein kann, und mit einem Sensor 20.

Das Kraftfahrzeug 10 mit seiner Fahrzeugeinrichtung 12 ist dazu ausgebildet, ein Verfahren durchzuführen beziehungsweise mittels eines Verfahrens betrieben werden zu können, bei welchem eine Bodenunebenheit 22 einer Straße 24 beziehungsweise einer Fahrbahn erfasst wird. Dabei erfolgt das Ermitteln der Bodenunebenheit 22 mittels der jeweiligen Federwegerfassungseinrichtung 14 des jeweiligen Rads 16 des Kraftfahrzeugs 10, wobei ein Federweg und/oder eine Federweggeschwindigkeit des jeweiligen Rads 16 erfasst wird beziehungsweise werden. Bei dem Verfahren wird in Abhängigkeit von dem jeweiligen erfassten Federweg und/oder der Federweggeschwindigkeit die Bodenunebenheit 22 mittels der elektronischen Recheneinrichtung 18 der Fahrzeugeinrichtung 12 ermittelt, wobei zusätzlich eine Aufbaudrehwinkelbeschleunigung mit dem Sensor 20 erfasst wird und die Bodenunebenheit 22 zusätzlich in Abhängigkeit der Aufbaudrehwinkelbeschleunigung ermittelt wird.

Fig. 2 zeigt in einer schematischen Seitenansicht das Kraftfahrzeug 10 der Fig. 1, wobei exemplarisch passend zu dem jeweiligen Bereich der Straße 24 das entsprechende Signal der Federwegerfassungseinrichtung 14 für eines der beiden vorderen Räder 16 des Kraftfahrzeugs 10 gezeigt ist. Dabei entspricht die obere Linie 26 der Aufbaubewegung und die untere Linie 28 dem Federweg, jeweils aufgetragen über Ihrer Position auf der Straße 24. Die beiden Linien 26 und 28 geben somit das Messsignal beziehungsweise die Messsignale wieder, welche bei dem Ermitteln der Bodenunebenheit 22 herangezogen werden. Wie aus der Darstellung ersichtlich, resultieren aus kurzen Schlaglöchern und Verwerfungen vergleichsweise große Federwege und vor allem Federweggeschwindigkeiten. Damit sind diese Signale sehr gut zur Detektion dieser Bodenunebenheiten 22 geeignet. Anhand der Aufbaubewegung 26 ist zu erkennen, dass diese kurzen Bodenunebenheiten nur kleine Aufbaubewegungen erzeugen. Die Aufbaubewegung ist damit zur Detektion kurzer Bodenunebenheiten 22 ungeeignet.

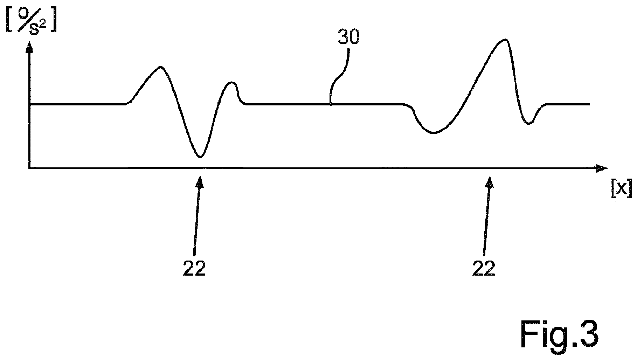

Beim Überfahren von langgezogenen Unebenheiten, wie Geschwindigkeitsschwellen, treten dagegen nur geringe Federwege und Federweggeschwindigkeiten auf. Diese sind damit zur Erkennung dieser Bodenunebenheiten 22 ungeeignet. Damit zusätzlich zu Schlaglöchern auch vorteilhaft breite und/oder langgezogene Unebenheiten, wie Geschwindigkeitsschwellen, beispielsweise in Form eines Schlafenden Polizeimannes (Englisch: Sleeping Policeman) erkannt werden können, wird das Signal 30 des Sensors 20 mit herangezogen, welches Aufbaudrehwinkelbeschleunigung beschreibt. Fig. 3 zeigt ein Diagramm des Signals 30 beim Überfahren einer langgezogenen Unebenheit, wie einer Geschwindigkeitsschwelle, beispielsweise in Form eines Schlafenden Polizeimannes. Dabei wird, um Schwellen vorteilhaft zu erkennen, als Aufbaudrehwinkelbeschleunigung eine Nickwinkelbeschleunigung verwendet, so dass durch das Signal 30 ein Nicken des Kraftfahrzeugs 10 beschrieben werden kann. Dabei zeigt Fig. 3 zwei Ausschläge der Kurve beziehungsweise des Signals 30, so wie sie beim Auffahren auf und Abfahren von der langgezogenen Unebenheit auftreten. Anhand eines solchen Verlaufs der Nickbeschleunigung lassen sich langgezogene Bodenunebenheiten 22, wie beispielsweise Geschwindigkeitsschwellen, erkennen und klassifizieren.

Zusätzlich zu dem Kraftfahrzeug 10 und dem Verfahren soll ferner ein System vorgestellt werden, welches eine zentrale elektronische Recheneinrichtung 32 umfasst, welche fahrzeugextern ist, und über Kommunikationsmittel, insbesondere eine Car2X-Kommunikation 36, mit dem Kraftfahrzeug 10 kommunizieren kann. Dabei sind dem System wenigstens zwei Kraftfahrzeuge 10 zugeordnet sind, und das System umfassend die zentrale elektronische Recheneinrichtung 32 dazu ausgebildet ist, die wenigstens zwei Kraftfahrzeuge 10 mit dem hier vorgestellten Verfahren zu betreiben oder zumindest insbesondere über die Car2X-Kommunikation 36 Informationen über die Bodenunebenheiten 22 zwischen den Kraftfahrzeugen 10 auszutauschen. Dabei ist es von Vorteil, wenn die ermittelte Bodenunebenheit 22 mit ihrer Position, die beispielsweise mittels GPS und/oder Odometrie durch das Kraftfahrzeug 10 erfasst werden kann, in einer Speichereinrichtung der Fahrzeugeinrichtung 12 abgespeichert wird und/oder die ermittelte Bodenunebenheit 22 mit ihrer Position an die fahrzeugexterne, zentrale elektronische Recheneinrichtung 32, insbesondere via der Car2X-Kommunikation 36 übertragen wird.

Durch die fahrzeugexterne, zentrale elektronische Recheneinrichtung ergibt sich ferner die Möglichkeit zwischen den wenigstens zwei Kraftfahrzeugen 10 beziehungsweise mindestens einem weiteren Kraftfahrzeug 10, das sich insbesondere in der Nähe der Position einer der Bodenunebenheiten 22 befindet, ein Signal bereitzustellen. Das Signal kann beispielsweise ein akustisches oder optisches Warnsignal, aber auch ein Steuersignal sein, welches dazu benutzt werden kann, in Abhängigkeit von der ermittelten Bodenunebenheit 22 für eine verstellbare Federung und/oder Dämpfung 34 des Kraftfahrzeugs 10 eine Festigkeit für wenigstens ein Rad 16 zum Überfahren der Bodenunebenheit 22 vorzugeben. Dabei kann das Vorgeben für die Federung und/oder Dämpfung 34 durch die elektronische Recheneinrichtung 18 und/oder durch die fahrzeugexterne, zentrale elektronische Recheneinrichtung 32 erfolgen.

Somit kann auf vorteilhafte Weise über die zentrale elektronische Recheneinrichtung 32, welche eine Cloud-Umgebung bereitstellen kann, eine cloudbasierte prädiktive Dämpferverstellung beziehungsweise Federungsverstellung der Federung und/oder Dämpfung 34 des Kraftfahrzeugs 10 durchgeführt werden.

Dabei kann ferner insbesondere aufgrund der Nickwinkeldrehbeschleunigung eine Art der Bodenunebenheit 22 bestimmt werden, es kann somit also bestimmt werden, ob es sich um ein Schlagloch, eine Schwelle und/oder eine langgezogene Unebenheit, wie beispielsweise eine Geschwindigkeitsschwelle oder dergleichen, handelt. Damit kann ferner, um einen besonders hohen Fahrkomfort mit dem Kraftfahrzeug 10 zu ermöglichen, der Grad der Festigkeit der Federung 34 beziehungsweise Dämpfung, als auch die Federung 34 beziehungsweise Dämpfung pro Rad 16, in Abhängigkeit von der bestimmten Art der Bodenunebenheit 22 erfolgen. Darüber hinaus kann das Ändern der Federung und/oder Dämpfung 34 beziehungsweise der Grad der Festigkeit bei dem Verstellen der Federung und/oder Dämpfung 34 beziehungsweise die Federung und/oder Dämpfung 34 pro Rad 16 zusätzlich in Abhängigkeit von einem Fahrzeugzustand, wie beispielsweise einer Fahrzeuggeschwindigkeit und/oder einem Fahrzeugniveau, eingestellt werden.

Grundsätzlich kann mit dem hier vorgestellten Verfahren das Verstellen der Federung und/oder Dämpfung 34 bei einem in Fahrtrichtung des Kraftfahrzeugs 10 hinten liegenden Rad 16 erfolgen, nachdem, aufgrund des Befahrens der Bodenunebenheit 22 mit einem vorderen Rad 16, diese ermittelt wird. Dies ist jedoch insbesondere abhängig von der möglichen Geschwindigkeit des Verstellens der Federung und/oder Dämpfung 34, als auch der Fahrzeuggeschwindigkeit und somit der Zeit zwischen dem Erfassen und dem Verstellen, und kann nicht in allen Fahrsituationen umgesetzt werden, da eine Dämpferverstellung in der Regel zu langsam ist, um die Dämpfer nach dem Detektieren eines entsprechenden Hindernisses von weich auf hart zu stellen. Möglich kann es beispielweise bei besonders langgezogenen Bodenschwellen sein, welche vorteilhaft durch das Verfahren erfasst werden können.

Zusätzlich oder alternativ kann insbesondere bei erneutem Befahren der Position, an welcher sich die Bodenunebenheit 22 befindet, die Federung und/oder Dämpfung 34 entsprechend eingestellt werden. Insbesondere vorteilhaft ist das Einstellen beziehungsweise Verstellen der Federung und/oder Dämpfung 34, wenn dies durch die fahrzeugexterne, zentrale elektronische Recheneinrichtung 32 erfolgt, so dass die durch das jeweilige Kraftfahrzeug 10 erfassten Daten beziehungsweise Informationen über die Bodenunebenheit 22 einer ganzen Fahrzeugflotte zugestellt beziehungsweise für diese verwendet werden können.

Durch das hier vorgestellte Kraftfahrzeug 10, das Verfahren sowie das System kann dem Problem begegnet werden, das Federungen beziehungsweise Dämpfer (Dämpfung 34) auf normal Straßen 24 bei Geradeausfahrt in der Regel in einer weichen Dämpferstellung beziehungsweise weich federnd betrieben werden, sodass bei unerwarteten Auftreten von Bodenunebenheiten 22, wie Schlaglöchern oder Schwellen, Federwegbegrenzer, beispielsweise Puffer und/oder Zuganschlagfedern, an ihr Limit kommen, was haptisch wie auch akustisch zu deutlichem, unkomfortablen Verhalten und einer erhöhten Bauteilbelastung, insbesondere Bauteilspitzenbelastung, führt. Dieses Verhalten könnte jedoch durch eine härtere Dämpferstellung beziehungsweise einen härteren Grad der Federung 34 verhindert werden wie es nun durch das hier vorgestellte Kraftfahrzeug 10, das System und das Verfahren ermöglicht wird.

So werden hier insbesondere für eine Schlaglochwarnung beziehungsweise Warnung vor Bodenunebenheiten 22 die Car2X-Kommunikation 36 verwendet, wodurch ein Sammeln von Informationen zu den Bodenunebenheiten 22 durch die Cloud beziehungsweise die fahrzeugexterne, zentrale elektronische Recheneinrichtung 32 ermöglicht wird, so dass die Position und/oder die Art beziehungsweise Klassifizierung von Bodenunebenheiten 22, wie beispielsweise Schlaglöcher oder Schwellen, theoretisch für eine große Anzahl an Straßen 24 weltweit ermöglicht wird, falls diese zumindest ab und zu von einem hier vorgestellten Kraftfahrzeug 10 befahren werden.

Die Daten beziehungsweise Informationen über die Bodenunebenheiten 22 können an alle Car2X-fähigen Fahrzeug bereitgestellt werden, um beispielsweise sowohl visuell, als auch akustisch vor entsprechenden Events zu warnen, beziehungsweise diese Information zu nutzen, um noch vor dem Überfahren des entsprechenden Hindernisses beziehungsweise Bodenunebenheit 22 die Verstelldämpfung insbesondere in Richtung "hart" zu verstellen. Die Dämpfungswerte beziehungsweise der Grad der Festigkeit der Federung 34 können dabei abhängig von der Art des Hindernisses, wie beispielsweise Schlagloch, Schwelle, einseitig oder beidseitig für die Räder 16 durch die Federung und/oder Dämpfung 34 gewählt werden. Zusätzlich oder alternativ kann dies insbesondere auch abhängig von Fahrzustandsgrößen, wie Fahrgeschwindigkeiten und Fahrzeugniveau, gewählt werden. Dabei kann nicht nur die Art des Hindernisses, sondern beispielsweise auch dessen Schwere beziehungsweise Größe, wie beispielsweise eine Schlaglochtiefe oder der Ansteigewinkel einer Schwelle, verwendet werden.

Wird das Hindernis überfahren, kann am Ende des Überfahrens die Dämpfung beziehungsweise Federung 34 wieder auf den normalen Wert eingestellt beziehungsweise verstellt, insbesondere reduziert, werden.

Versuche mit dem hier vorgestellten Verfahren zum Verstellen der Federung und/oder Dämpfung 34 haben eine deutliche Verbesserung des Fahrkomforts beim Überfahren extremer Bodenunebenheiten 22 gezeigt. Ferner kann die Detektion von langgezogenen beziehungsweise breiten Bodenwellen, insbesondere Schlafenden Polizisten, wie sie beispielsweise in West- und/oder in Südeuropa häufig verwendet werden, aufgrund eines Algorithmus bei dem Erkennen der Bodenunebenheiten 22, welche zusätzlich zu dem Federwegsignal auch die **Nickwinkelbeschleunigung nutzt,** besonders vorteilhaft ermöglicht werden.

## Patentansprüche

1. Verfahren zum Betreiben eines Kraftfahrzeugs (10), bei welchem mittels einer Fahrzeugeinrichtung (12) des Kraftfahrzeugs (10) eine Bodenunebenheit (22) einer Straße (24) ermittelt wird und bei dem mittels einer jeweiligen Federwegerfassungseinrichtung (14) eines jeweiligen Rads (16) des Kraftfahrzeugs (10), ein Federweg und/oder eine Federweggeschwindigkeit des jeweiligen Rads (16) erfasst wird und bei welchem in Abhängigkeit von dem jeweiligen erfassten Federweg und/oder der Federweggeschwindigkeit die Bodenunebenheit (22) mittels einer elektronischen Recheneinrichtung (18) der Fahrzeugeinrichtung (12) ermittelt wird,
wobei zusätzlich eine Aufbaudrehwinkelbeschleunigung mit einem Sensor (20) erfasst wird und die Bodenunebenheit (22) zusätzlich in Abhängigkeit der Aufbaudrehwinkelbeschleunigung ermittelt wird,
wobei die Aufbaudrehwinkelbeschleunigung eine Nickwinkelbeschleunigung des Kraftfahrzeugs (10) beschreibt,
wobei zur Detektion von einer langgezogenen, breiten Bodenschwelle als die Bodenunebenheit (22), die Nickwinkelbeschleunigung und somit eine Rotation des Kraftfahrzeugs (10) um die Fahrzeugquerrichtung verwendet werden, wobei mittels des Federwegs und/oder der Federweggeschwindigkeit Schlaglöcher und Verwerfungen als die Bodenunebenheit (22) ermittelt werden,
**dadurch gekennzeichnet, dass**
lediglich mittels der Nickwinkelbeschleunigung die langgezogene, breite Bodenschwelle als die Bodenunebenheit (22) ermittelt wird.

2. Verfahren nach Anspruch 1,
**dadurch gekennzeichnet, dass**
die ermittelte Bodenunebenheit (22) mit ihrer Position in einer Speichereinrichtung der Fahrzeugeinrichtung (12) abgespeichert wird und/oder die ermittelte Bodenunebenheit (22) mit ihrer Position an eine fahrzeugexterne, zentrale elektronische Recheneinrichtung (32) übertragen und/oder von dieser empfangen wird.

3. Verfahren nach Anspruch 2,
**dadurch gekennzeichnet, dass**
aufgrund der ermittelten Bodenunebenheit (22) ein Signal in dem Kraftfahrzeug (10) und/oder über die fahrzeugexterne, zentrale elektronische Recheneinrichtung (32) in einem weiteren Kraftfahrzeug (10), welches sich insbesondere in der Nähe der Position befindet, bereitgestellt wird.

4. Verfahren nach einem der vorhergehenden Ansprüche 2 oder 3,
**dadurch gekennzeichnet, dass**
in Abhängigkeit von der ermittelten Bodenunebenheit (22) für eine verstellbare Federung und/oder Dämpfung (34) des Kraftfahrzeugs (10) eine Festigkeit für wenigstens ein Rad (16) zum Überfahren der Bodenunebenheit (22) durch die elektronische Recheneinrichtung (18) verstellt wird.

5. Verfahren nach Anspruch 4,
**dadurch gekennzeichnet, dass**
das Verstellen der Federung und/oder Dämpfung (34) bei einer in Fahrtrichtung des Kraftfahrzeugs (10) hinten liegenden Rad (16) erfolgt, nachdem aufgrund des Befahrens der Bodenunebenheit (22) mit einem vorderen Rad (16), diese ermittelt wird, und/oder das Verstellen der Federung und/oder Dämpfung (34) bei einer Wiederholung der Fahrt an der Position der ermittelten Bodenunebenheit (22) erfolgt und/oder über die fahrzeugexterne, zentrale elektronische Recheneinrichtung (32) an der durch ein weiteres Kraftfahrzeug (10) ermittelten Bodenunebenheit (22) erfolgt.

6. Verfahren nach einem der vorhergehenden Ansprüche,
**dadurch gekennzeichnet, dass**
in Abhängigkeit von der ermittelten Bodenunebenheit (22) eine Geschwindigkeit des Kraftfahrzeugs (10) so weit zu reduziert wird, dass ein sicheres Überfahren der Bodenunebenheiten und/oder eine ausreichende Reduktion einer Bauteilbelastung erreicht werden.

7. Verfahren nach einem der vorhergehenden Ansprüche 4 oder 5,
**dadurch gekennzeichnet, dass**
anhand der ermittelten Nickwinkelbeschleunigung eine Art der Bodenunebenheit (22) bestimmt wird.

8. Verfahren nach Anspruch 7,
**dadurch gekennzeichnet, dass**
ein Grad der Festigkeit der Federung und/oder Dämpfung (34) und/oder die Federung und/oder Dämpfung (34) pro Rad (16) in Abhängigkeit von der bestimmten Art der Bodenunebenheit (22) und/oder einem Fahrzustand eingestellt wird.

9. Kraftfahrzeug (10) aufweisend eine Fahrzeugeinrichtung (12), mit einer jeweiligen Federwegerfassungseinrichtung (14) eines jeweiligen Rads (16), mit einer elektronischen Recheneinrichtung (18) und mit einem Sensor (20), wobei das Kraftfahrzeug und die elektronische Recheneinrichtung (18) dazu ausgebildet sind ein Verfahren gemäß Anspruch 1, gemäß der ersten Alternative der jeweiligen Ansprüche 2 und 3, gemäß Anspruch 4, gemäß der ersten zwei Alternativen des Anspruchs 5 oder gemäß einem der Ansprüche 6 bis 8 durchzuführen.

10. System mit einer fahrzeugexternen, zentralen elektronischen Recheneinrichtung (32), dem wenigstens zwei Kraftfahrzeuge (10) gemäß Anspruch 9 zugeordnet sind, und welches dazu ausgebildet ist mittels eines Verfahrens gemäß einem der Ansprüche 1 bis 8 die beiden Kraftfahrzeuge (10) zu Betreiben.

## Claims

1. Method for operating a motor vehicle (10), in which a ground unevenness (22) of a road (24) is ascertained by means of a vehicle device (12) of the motor vehicle (10), in which a suspension travel and/or a suspension travel speed of a particular wheel (16) is detected by means of a corresponding suspension travel detection device (14) of the particular wheel (16) of the motor vehicle (10), and in which the ground unevenness (22) is ascertained by means of an electronic computing device (18) of the vehicle device (12) depending on the particular detected suspension travel and/or the suspension travel speed,
wherein in addition a body rotation angle acceleration is detected by a sensor (20) and the ground unevenness (22) is ascertained additionally depending on the body rotation angle acceleration,
wherein the body rotation angle acceleration describes a pitch angle acceleration of the motor vehicle (10),
wherein the pitch angle acceleration and thus a rotation of the motor vehicle (10) about the vehicle transverse direction are used to detect an elongated wide speed bump as the ground unevenness (22), wherein potholes and faults are ascertained as the ground unevenness (22) by means of the suspension travel and/or the suspension travel speed, **characterized in that** the elongated wide speed bump is ascertained as the ground irregularity (22) solely by means of the pitch angle acceleration.

2. Method according to claim 1,
**characterized in that**
the ascertained ground unevenness (22), together with its position, is stored in a storage device of the vehicle device (12) and/or the ascertained ground unevenness (22), together with its position, is transmitted to and/or received from a vehicle-external, central electronic computing device (32).

3. Method according to claim 2,
**characterized in that**
a signal is provided in the motor vehicle (10) and/or, via the vehicle-external, central electronic computing device (32), in a further motor vehicle (10), which is located in particular near the position, due to the ascertained ground unevenness (22).

4. Method according to either of preceding claims 2 or 3,
**characterized in that**
for an adjustable suspension and/or damping (34) of the motor vehicle (10), a strength for at least one wheel (16) is adjusted by the electronic computing device (18) depending on the ascertained ground unevenness (22) in order to drive over the ground unevenness (22).

5. Method according to claim 4,
**characterized in that**
the suspension and/or damping (34) is adjusted at a wheel (16) located at the rear in the travel direction of the motor vehicle (10) after the ground unevenness (22) has been ascertained by driving over it with a front wheel (16), and/or the suspension and/or damping (34) is adjusted at the position of the ascertained ground unevenness (22) during a repeat of the journey, and/or via the vehicle-external, central electronic computing device (32) at the ground unevenness (22) ascertained by a further motor vehicle (10).

6. Method according to any of the preceding claims,
**characterized in that**
the speed of the motor vehicle (10) is reduced, depending on the ascertained ground unevenness (22), to such an extent that the ground unevennesses can be driven over safely and/or a component load is sufficiently reduced.

7. Method according to either of preceding claims 4 or 5,
**characterized in that**
a type of the ground unevenness (22) is determined on the basis of the ascertained pitch angle acceleration.

8. Method according to claim 7,
**characterized in that**
a degree of the strength of the suspension and/or damping (34) and/or the suspension and/or damping (34) is set per wheel (16) depending on the determined type of the ground unevenness (22) and/or a driving state.

9. Motor vehicle (10) having a vehicle device (12), comprising a corresponding suspension travel detection device (14) of a particular wheel (16), an electronic computing device (18), and a sensor (20), wherein the motor vehicle and the electronic computing device (18) are designed to perform a method according to claim 1, according to the first alternative of the each of claims 2 and 3, according to claim 4, according to the first two alternatives of claim 5, or according to any of claims 6 to 8.

10. System comprising a vehicle-external, central electronic computing device (32) to which at least two motor vehicles (10) according to claim 9 are assigned, and which is designed to operate the two motor vehicles (10) by means of a method according to any of claims 1 to 8.

## Revendications

1. Procédé permettant de faire fonctionner un véhicule automobile (10), dans lequel, au moyen d'un dispositif de véhicule (12) du véhicule automobile (10), une irrégularité du sol (22) d'une route (24) est déterminée et dans lequel, au moyen d'un dispositif de détection de course de suspension (14) respectif d'une roue (16) respective du véhicule automobile (10), une course de suspension et/ou une vitesse de course de suspension de la roue (16) respective sont détectées, et dans lequel, en fonction de la course de suspension et/ou de la vitesse de course de suspension respectives détectées, l'irrégularité du sol (22) est déterminée au moyen d'un dispositif de calcul électronique (18) du dispositif de véhicule (12),
dans lequel une accélération angulaire de rotation de carrosserie est en outre détectée au moyen d'un capteur (20) et l'irrégularité du sol (22) est en outre déterminée en fonction de l'accélération angulaire de rotation de carrosserie,
dans lequel l'accélération angulaire de rotation de carrosserie décrit une accélération angulaire de tangage du véhicule automobile (10),
dans lequel, l'accélération angulaire de tangage et, par conséquent, une rotation du véhicule automobile (10) autour du sens transversal du véhicule sont utilisées pour détecter un ralentisseur allongé et large en tant qu'irrégularité du sol (22), dans lequel des nids-de-poule et des failles sont déterminés en tant qu'irrégularité du sol (22) au moyen de la course de suspension et/ou de la vitesse de course de suspension, **caractérisé en ce que** le ralentisseur allongé et large est déterminé en tant qu'irrégularité du sol (22) uniquement au moyen de l'accélération angulaire de tangage.

2. Procédé selon la revendication 1,
**caractérisé en ce que**
l'irrégularité du sol (22) déterminée est enregistrée avec son emplacement dans un dispositif d'enregistrement du dispositif de véhicule (12) et/ou l'irrégularité du sol (22) déterminée est transmise avec son emplacement à un dispositif de calcul électronique central externe au véhicule (32) et/ou est reçue par celui-ci.

3. Procédé selon la revendication 2,
**caractérisé en ce que**
en fonction de l'irrégularité du sol (22) déterminée, un signal est transmis dans le véhicule automobile (10) et/ou, par l'intermédiaire du dispositif de calcul électronique central externe au véhicule (32), dans un autre véhicule automobile (10) qui se trouve en particulier à proximité de l'emplacement.

4. Procédé selon l'une des revendications précédentes 2 ou 3,
**caractérisé en ce que**
en fonction de l'irrégularité du sol (22) déterminée, pour une suspension et/ou un amortissement (34) réglables du véhicule automobile (10), une rigidité pour au moins une roue (16) est réglée par le dispositif de calcul électronique (18) afin de franchir l'irrégularité du sol (22).

5. Procédé selon la revendication 4,
**caractérisé en ce que**
le réglage de la suspension et/ou de l'amortissement (34) d'une roue (16) située à l'arrière dans le sens de la marche du véhicule automobile (10) est effectué après que, suite au passage de l'irrégularité du sol (22) par une roue (16) avant, ladite irrégularité du sol a été déterminée, et/ou le réglage de la suspension et/ou de l'amortissement (34) est effectué lors d'une répétition du trajet au niveau de l'emplacement de l'irrégularité du sol (22) déterminée et/ou est effectué par l'intermédiaire du dispositif de calcul électronique central externe au véhicule (32) au niveau de l'irrégularité du sol (22) déterminée par un autre véhicule automobile (10).

6. Procédé selon l'une des revendications précédentes,
**caractérisé en ce que**
en fonction de l'irrégularité du sol (22) déterminée, une vitesse du véhicule automobile (10) est réduite jusqu'à ce qu'un franchissement sécuritaire des irrégularités du sol et/ou qu'une réduction suffisante d'une sollicitation de composants soient atteints.

7. Procédé selon l'une des revendications précédentes 4 ou 5,
**caractérisé en ce que**
un type d'irrégularité du sol (22) est défini à l'aide de l'accélération angulaire de tangage déterminée.

8. Procédé selon la revendication 7,
**caractérisé en ce que**
un degré de rigidité de la suspension et/ou de l'amortissement (34) et/ou la suspension et/ou l'amortissement (34) par roue (16) sont ajustés en fonction du type d'irrégularité du sol (22) défini et/ou d'un état de marche.

9. Véhicule automobile (10) présentant un dispositif de véhicule (12), comportant un dispositif de détection de course de suspension (14) respectif d'une roue (16) respective, un dispositif de calcul électronique (18) et un capteur (20), dans lequel le véhicule automobile et le dispositif de calcul électronique (18) sont configurés pour mettre en œuvre un procédé selon la revendication 1, selon la première alternative des revendications 2 et 3 respectives, selon la revendication 4, selon les deux premières alternatives de la revendication 5 ou selon l'une des revendications 6 à 8.

10. Système comportant un dispositif de calcul électronique central externe au véhicule (32), auquel sont associés au moins deux véhicules automobiles (10) selon la revendication 9, et qui est configuré pour faire fonctionner les deux véhicules automobiles (10) au moyen d'un procédé selon l'une des revendications 1 à 8.
